**Europäisches Patentamt**

(19) **European Patent Office**

**Office européen des brevets**

(11) Publication number: **0 235 664**
**B1**

(12) **EUROPEAN PATENT SPECIFICATION**

(45) Date of publication of the patent specification:
20.12.89

(21) Application number: **87102223.2**

(22) Date of filing: **17.02.87**

(51) Int. Cl.⁴: **C 08 L 27/08, C 08 J 5/18,
B 32 B 27/28, B 32 B 27/08 //
(C08L27/08, 23:02)**

ERRATUM

(SEITE, SPALTE, ZEILE)
(PAGE, COLUMN, LINE)
(PAGE, COLONNE, LIGNE)

| DIE TEXTSTELLE : TEXT PUBLISHED : LE PASSAGE SUIVANT : | | | | LAUTET BERICHTIGT: SHOULD READ : DEVRAIT ETRE LU : |
|---|---|---|---|---|
| at least one layer is produced above. | 2 | 1 | 61/62 | at least one layer is produced of a blend of polymers of the present invention described above. |
| genenrally from 1 to 8 carbon | 2 | 2 | 28 | generally from 1 to 8 carbon |
| acrylate ethyl acrylate | 2 | 2 | 31 | acrylate, ethyl acrylate |
| Olefins copolymers (c) | 2 | 2 | 50 | Olefin copolymers (c) |
| polymerisation in high pressure | 3 | 3 | 18/19 | polymerisation process in a high pressure |
| Preferably, the low-layered | 3 | 4 | 45 | Preferably, the two-layered |
| 9 percent EVA And 9 percent | 4 | 6 | 6 | 9 percent EVA and 9 percent |
| the folded film are selaed | 5 | 8 | 9 | the folded film are sealed |
| vinylidence chloride having copolymer | 5 | 8 | 21/22 | vinylidence chloride copolymer |
| 1-Buten oder 1,3-Budatien sind. | 6 | 10 | 8/9 | 1-Buten oder 1,3-Butadien sind |

Tag der Entscheidung über die Berichtigung )
Date of decision on rectification: ) **21.2.90**
Date de décision portant ) sur modification: )

Ausgabe- und Ver-öffentlichungstag: )
Issue and publication ) date: ) **2.5.90**
Date d'edition et de ) publication: )

Patbl.Nr) **90/18**
EPB no:) .........
Bull. no:)

Europäisches Patentamt

(19) European Patent Office

Office européen des brevets

(11) Publication number: **0 235 664**
B1

(12) # EUROPEAN PATENT SPECIFICATION

(45) Date of publication of the patent specification:
**20.12.89**

(21) Application number: **87102223.2**

(22) Date of filing: **17.02.87**

(51) Int. Cl.⁴: **C 08 L 27/08**, C 08 J 5/18,
B 32 B 27/28, B 32 B 27/08 //
(C08L27/08, 23:02)

(54) Blends of vinylidene chloride copolymers and olefin copolymers and films produced therefrom.

(30) Priority: **27.02.86 CH 795/86**

(43) Date of publication of application:
**09.09.87 Bulletin 87/37**

(45) Publication of the grant of the patent:
**20.12.89 Bulletin 89/51**

(84) Designated Contracting States:
**AT BE CH DE ES FR GB IT LI NL SE**

(56) References cited:
**GB-A- 2 038 861**

(73) Proprietor: **THE DOW CHEMICAL COMPANY, 2030 Dow
Center Abbott Road P.O. Box 1967, Midland
Michigan 48640-1967 (US)**

(72) Inventor: **Hermus, Antonius Johannes Maria,
Riedgutschstrasse 26, CH-8832 Wollerau (CH)**

(74) Representative: **Sternagel, Hans-Günther, Dr. et al,
Patentanwälte Dr. Michael Hann Dr. H.-G. Sternagel
Sander Aue 30, D-5060 Bergisch Gladbach 2 (DE)**

## Description

*Background of the Invention*

The present invention relates to blends of vinylidene chloride copolymers and olefin copolymers, and to films produced from these blends.

Vinylidene chloride polymers have found wide use in the preparation of film materials. The films are useful for a great variety of packaging purposes, for example for packaging food. Such films possess many useful properties such as transparency, heat sealability and low water vapour transmission rates which are desirable for packaging food. Oriented films such as blown films or oriented cast films ar produced in industry in large quantities. Monolayered and multilayered films are known. From GB-A-2 038 861 it is known to extrude a film which comprises a mixture of polyvinylidene chloride and an ethylene/vinyl acetate copolymer as a core layer and two outer layers produced of an ethylene/vinyl acetate copolymer. Oriented films can be heated during the packaging process to cause the film to shrink tightly around the contents. Unfortunately, the shrinkability of the known blown or oriented cast films produced from vinylidene chloride polymers is not always sufficient. Furthermore, the temperature required to seal the films produced from the vinylidene chloride polymers is often undesirably high.

According to the present invention, polymeric compositions are provided from which novel films having high shrinkability and/or low sealing temperatures compared to films produced from known vinylidene chloride polymers may be prepared.

*Summary of the Invention*

The present invention relates to a blend of polymers comprising

(a) from 70 to 97 percent, based on the total weight of (a), (b) and (c), of a vinylidene chloride copolymer, said vinylidene chloride copolymer having copolymerised therein vinylidene chloride in an amount of from 50 to 95 percent and at least one monoethylenically unsaturated monomer copolymerisable therewith in an amount of from 50 to 5 percent, based on the total vinylidene chloride copolymer (a) weight;

(b) from 30 to 3 percent, based on total polymer weight of (a), (b) and (c), of an olefin copolymer, said olefin copolymer having copolymerised therein at least one olefin monomer in an amount of from 85 to 97 percent and from 15 to 3 percent acrylic or methacrylic acid, based on the total weight of the olefin copolymer (b); and

(c) from 0 to 15 percent, based on total weight of (a), (b) and (c), of an olefin copolymer, said olefin copolymer having copolymerised therein at least one olefin monomer in an amount of from 70 to 97 percent and from 30 to 3 percent vinyl acetate, based on the total weight of olefin copolymer (c).

Furthermore, the present invention relates to a mono- or multilayered film wherein at least one layer is produced above. Oriented cast films or blown films are preferred.

It has been found that films produced from the polymer blends of the invention have considerably lower sealing temperatures than known films produced from vinylidene chloride polymers. Furthermore, it has been found that blown or blown cast films produced from the polymer blends of the invention have considerably higher shrinkability than the known blown or oriented cast films produced from vinylidene chloride polymers.

*Detailed Description of the Invention*

Vinylidene chloride copolymers (a) which are suitable in the polymer blends and films of the present invention contain from 50, preferably from 70 and most preferably from 80, weight percent vinylidene chloride, and up to 95, preferably up to 90 and most preferably up to 85, weight percent vinylidene chloride, based on the total weight of vinylidene chloride copolymer (a).

The preferred amounts of the monoethylenically unsaturated monomer(s) copolymerisable with vinylidene chloride are chosen correspondingly.

Monoethylenically unsaturated monomers suitable for copolymerisation with vinylidene chloride include for example vinyl chloride, alkyl acrylates, alkyl methacrylates, acrylic acid, methacrylic acid, itaconic acid, acrylonitrile, and methacrylonitrile. Vinyl chloride, alkyl acrylates and alkyl methacrylates are preferred. The alkyl acrylates and alkyl methacrylates have genenrally from 1 to 8 carbon atoms and preferably from 1 to 4 carbon atoms per alkyl group. Of the alkyl acrylates and methacrylates, methyl acrylate ethyl acrylate and methyl methacrylate are preferred. For the purpose of the present invention, vinyl chloride is the most preferred monomer used for copolymerisation with vinylidene chloride.

Methods of forming the vinylidene chloride copolymer are well-known in the prior art. Any method of polymerisation capable of forming a vinylidene chloride copolymer described above is suitable for use in the present invention. Typically, the vinylidene chloride copolymer may be prepared in a suspension or emulsion polymerisation process.

Olefin copolymers (b) which are suitable in the polymer blends and films of the present invention contain from 85 and preferably from 90, weight percent and up to 97, preferably up to 93, weight percent of at least one olefin monomer, based on the total weight of the olefin copolymer (b). The preferred amounts of acrylic or methacrylic acid are chosen correspondingly. Acrylic acid is preferred.

Olefins copolymers (c) which are optionally present and are suitable in the polymer blends and films of the present invention contain from 70 and preferably from 73, weight percent and up to 97, preferably up to 90 and most preferably up to 80, weight percent of at least one olefin monomer, based on the total weight of the olefin copolymer (c). The preferred amount of vinyl acetate is chosen correspondingly.

Olefin monomers suitable for the olefin copolymers (b) and (c) are the olefin monomers having generally from 2 to 20 carbon atoms per molecule. Beneficially, the olefin monomers are 1-alkenes having from 2 to 18 and preferably from 2 to 8 carbon atoms per molecule. Desirably, the olefin monomer is ethylene, propylene, 1-butene or 1,3-butadiene.

More desirably, the olefin monomer is ethylene or propylene. Ethylene is the most preferred olefin monomer. The olefin copolymers (b) and (c) suitable for use in the present invention contain at least one of the above described olefin monomers. It is sometimes desirable for the olefin copolymers (b) and (c) to contain more than one of the above described olefin monomers, however, the total amount of these olefin monomers does not exceed 97 percent, based on the total weight of the olefin copolymer. Exemplary of suitable combinations of more than one of the above described olefin monomers are ethylene and propylene; ethylene and 1-butene, and ethylene or propylene and a diene.

The olefin copolymers (b) and (c) can be prepared by methods well-known in the art. Typically, the olefin copolymers (b) and (c) are produced by a slurry polymerisation process or by a gas phase polymerisation in high pressure autoclave.

The polymer blend of the present invention contains from 70, preferably from 80 and most preferably from 85, weight percent and up to 97, preferably up to 95, weight percent, based on the total weight of the copolymers (a), (b) and (c) of the vinylidene chloride copolymer (a).

Furthermore, the polymer blend of the present invention contains from 3, preferably from 5 and most preferably from 10, weight percent and up to 30, preferably up to 20 and most preferably up to 15, weight percent of the olefin copolymer (b), based on the total weight of the copolymers (a), (b) and (c).

The polymer blend of the present invention can also contain from 0, preferably from 5, weight percent and up to 15, preferably up to 10, weight percent of the olefin copolymer (c), based on the total weight of the copolymers (a), (b) and (c).

When preparing the polymer blends of the present invention it is important that complete and intimate mixing of the polymeric ingredients is effected. This is best accomplished by thoroughly blending the polymeric materials while they are in a solid powdered or pellet form. The polymer blends of the present invention can also be readily prepared by using conventional melt processing blending techniques. Desirable results are for example obtained when an extruder, either single screw or twin screw, is used for melt processing the polymer blends of the present invention.

In addition to the vinylidene chloride copolymer (a) and the olefin copolymers (b) and optionally (c), a variety of additives may be incorporated to the polymer blends of the present invention. The amount of additives added will ordinarily be less than about 20 weight percent, more beneficially less than about 8 weight percent and desirably less than about 5 weight percent based on total weight of the copolymers (a), (b) and (c). Exemplary of the additives which may be incorporated into the polymer blends of the present invention are plasticisers, heat stabilisers, light stabilisers, pigments, processing aids, lubricants, polymeric filler materials and other filler materials.

Films, preferably blown or oriented cast films, and related shaped articles can be fabricated from the polymer blends of the invention by any of the conventionally employed fabricating or extruding techniques. Of particular advantage, is to employ the bubble technique for making films in tubular form. Preferably, oriented films, most preferably biaxially oriented films are prepared in a known fashion, for example as described by R. Wesseling in polyvinylidene chloride/polymer monographs, volume 5, 1977, Gordon and Breach Science Publishers New York. The blow-up ratio is preferably from about 2, most preferably from about 3.5 and preferably up to about 7, most preferably up to about 5.

Monolayered films produced from the polymer blend of the present invention have high shrinkability and a low sealing temperature. The blend of polymers of the present invention is also useful for producing one or more layers of a multilayered film. Multilayered films can be produced according to known coextrusion techniques. Blown and oriented cast films are preferred. The multilayered films can comprise layers produced of a material other than the polymer blend of the present invention. However, preferably at least 50 percent, more preferably at least 70 percent and most preferably at least 80 percent of the total film thickness is provided by one or more layers produced from blends of polymers according to the present invention. Useful materials for producing film layers which can be coextruded with layers produced from polymer blends according to the present invention are for example ethylene/vinyl acetate copolymers which preferably contain more than 10 weight percent, more preferably more than 20 weight percent vinyl acetate, based on the polymer weight.

The preferred material is a polymer b) described above. Two-layered films of which one layer is produced of a polymer blend according to the present invention and one layer is produced of a polymer b) described above have similar shrinkability and even improved sealing strength compared to a monolayered film produced from the polymer blend of the present invention. When sealing two films produced of the two described layers, the sealing is preferably made between those layers produced of polymer b).

The two-layered films preferably have a thickness of 10 to 40 micrometers. Preferably, the low-layered films are produced by bubble technique. The bubble can then be collapsed to produce double-wound films having a thickness of 20 to 80 micrometers and having a structure of layers polymer b)/blend of the invention//blend of the invention/polymer b).

The temperature for sealing the films of the present invention air tightly is lower than that for sealing air tightly the comparable known films produced from polyvinylidene chloride of similar molecular weight. Furthermore, the blown or oriented cast films of the present invention have higher shrinkability than comparable known blown or oriented cast films produced from polyvinylidene chloride of similar molecular weight. Accordingly, the films of the present invention are very useful as packaging material. Generally, these improved properties are reached without substantial decrease in the mechanical properties and without a substantial increase in gas permeability.

The present invention is illustrated in further detail by the following examples. The examples are for purposes of illustration only and are not to be construed as limiting the scope of the present invention. All parts and percentages are by weight unless otherwise specifically noted.

*Examples*

The following polymer formulations are used for preparing the blends of polymers and films of the present invention.

TABLE I

| Code | Polymer formulation description |
|------|----------------------------------|
| VDC-1 | A vinylidene chloride copolymer resin having copolymerised therein about 85 percent vinylidene chloride and about 15 percent vinyl chloride, both percentages being based upon copolymer weight and having a weight average molecular weight of about 100 000. The copolymer formulation comprising this vinylidene chloride copolymer and common additives like plasticisers is commercially available from The Dow Chemical Company as SARAN (Trademark) 872C resin. |
| VDC-2 | A vinylidene chloride copolymer resin having copolymerised therein about 80 percent vinylidene chloride and about 20 percent vinyl chloride, both percentages being based upon copolymer weight and having a weight average molecular weight of about 70 000. The copolymer formulation comprising this vinylidene chloride copolymer and common additives like plasticisers is commercially available from The Dow Chemical Company as SARAN (Trademark) 313C resin. |
| EAA-1 | An ethylene/acrylic acid copolymer having copolymerised therein 91 percent ethylene and 9 percent acrylic acid, both percentages being based upon copolymer weight. This copolymer has a melt index (ASTM Test D-1238) of 20 grams per 10 minutes and a density of 0.938 g/cm$^3$ and is commercially available from The Dow Chemical Company as PRIMACOR (Trademark) 3460 copolymer. |
| EAA-2 | An ethylene/acrylic acid copolymer having copolymerised therein 93.5 percent ethylene and 6.5 percent acrylic acid, both percentages being based upon copolymer weight. This copolymer has a melt index (ASTM Test D-1238) of 9 grams per 10 minutes and a density of 0.932 g/cm$^3$ and is commercially available from The Dow Chemical Company as PRIMACOR (Trademark) 3340 copolymer. |
| EVA | An ethylene/vinyl acetate copolymer having polymerised therein 73 percent ethylene and 27 percent vinyl acetate, both percentages being based upon copolymer weight. This copolymer has a melt index (ASTM Test D-1238) of 5.5 grams per 10 minutes and is commercially available from |

E.I. DuPont de Nemours & Company as ELVAX (Trademark) 3175 polymer.

*Example 1*

A blown film is produced from a polymer blend of 82 percent VDC-1, 9 percent EVA And 9 percent EAA-1 on a standard blown film line extruder. The film blow-up ratio is about 4.2 The melt temperature is about 178°C; the width of the prepared flat, transparent film is about 800 mm; and the thickness of the produced film is about 15 micrometers.

*Example A* (Comparison)

A film is produced from a polymer blend of 91 percent VDC-1 and 9 percent EVA in the same way, of the same blow-up ratio and of the same film thickness as in Example 1.

The gas permeability and the mechanical properties of the films produced according to Example 1 and Example A are measured and are shown in Table II.

TABLE II

| | Example 1 | Example A |
|---|---|---|
| Water vapour transmission g/m$^2$·24 h (90% rel. humidity, 38°C) | 4.1 | 4.0 |
| Oxygen permeability cm$^3$/m$^2$·24 h·bar (23°C) | 28.0 | 20.0 |
| Elongation at break (%) machine direction | 60 | 40 |
| cross direction | 35 | 35 |
| E modulus (N/mm$^2$) machine direction | 520 | 580 |
| cross direction | 400 | 530 |
| Shrinkability (%) 1 min. in oil at 100°C | | |
| machine direction | 25 | 21 |
| cross direction | 20 | 15 |
| 10 min. in hot air at 100°C | | |
| machine direction | 21 | 16 |
| cross direction | 15 | 12 |
| Sealing temperature (°C) | 75 | 105 |

The elongation at break and the E modulus are measured according to DIN 53571A. The oxygen permeability is measured at 23°C in equipment of the type known as MOCON OX-TRAN.

Table II illustrates that the film of the invention not only has improved shrinkability and a lower sealing temperature but also an even higher flexibility than a known film, and demonstrates that the films of the invention are very useful as packaging material.

*Example 2*

A blown film is produced from a polymer blend of 95 percent VDC-2 and 5 percent EAA-1 as described in Example 1.

*Example 3*

A blown film is produced from a polymer blend of 87 percent VDC-2, 5 percent EAA-1 and 8 percent EVA as described in Example 1.

### Example 4

A blown film is produced from a polymer blend of 90 percent VDC-2 and 10 percent EAA-2 as described in Example 1.

### Example B (Comparison)

A blown film is produced from VDC-2 as described in Example 1.

The gas permeability and the mechanical properties of the films of Examples 2 to 4 and of Example B are shown in Table III. The film width and film thickness are the same as in Example 1.

### TABLE III

| | Ex. 2 | Ex. 3 | Ex. 4 | Ex. 5 |
|---|---|---|---|---|
| Water vapour transmission g/m²·24 h (90% rel. humidity, 38°C) | 3.6 | 4.6 | 4.6 | 4.4 |
| Oxygen transmission cm³/m²·24 h·bar (23°C) | 31 | 24 | 26 | 28 |
| Elongation at break (%) machine direction | 42 | 56 | 60 | 42 |
| cross direction | 40 | 31 | 45 | 27 |
| E modulus (N/mm²) machine direction | 469 | 487 | 520 | 560 |
| cross direction | 365 | 352 | 490 | 500 |
| Shrinkability (%) 1 min. in oil at 100°C machine direction | 35 | 35 | 34 | 25 |
| cross direction | 30 | 25 | 30 | 18 |
| Sealing temperature (°C) | 85 | 75 | 80 | 105 |

The elongation at break, the E modulus and the oxygen permeability are measured as set forth for Example 1 and Example A.

The film of Example 2 does not have substantial cling properties and low film to film blocking. The film of Example 3 has a high film to film cling.

### Example 5

A blown coextruded film is produced of two layers. The first layer has a thickness of 30 µm and is produced from a polymer blend of 95 percent VDC-1 and 5 percent EAA-1. The second layer has a thickness of 5 µm and is produced from EAA-1.

The film blow-up is about 5.

The produced film has a shrinkability and a sealing temperature which is comparable to those of the films according to Examples 1 to 4. The sealing strength is even improved compared to Examples 1 to 4.

### Food wrapping examples

I   Cheese is wrapped with the film of Example 3 and of Example B via hand-wrapping and machine-wrapping on an Alpma U64 cheese wrap machine. The oven temperature for causing the film of Example 3 to shrink around the cheese is 150°C over one-half minute whereas an oven temperature of 180°C over one-half minute is necessary to cause the shrink effect of the film of Example B.

II   A piece of film of Example 2 is folded once and 2 edges of the folded film are selaed in order to produce a bag. The bag is filled with cheese and the remaining opening is then also sealed. An oven temperature of 150°C over 1 minute causes the bag to shrink tightly around the cheese. The sealing does not break.

### Claims

1. A blend of polymers comprising

(a) from 70 to 97 percent, based on the total weight of (a), (b) and (c), of a vinylidene chloride copolymer, said vinylidene chloride having copolymer having polymerised therein vinylidene chloride in an amount of from 50 to 95 percent and at least one monoethylenically unsaturated monomer copolymerisable therewith in an amount of from 50 to 5 percent, based on the total weight of the vinylidene chloride copolymer (a);

(b) from 30 to 3 percent, based on the total weight of (a), (b) and (c), of an olefin copolymer, said olefin copolymer having polymerised therein at least one olefin monomer in an amount of from 85 to 97 percent and from 15 to 3 percent acrylic or methacrylic acid, based on the total weight of the olefin copolymer (b); and

(c) from 0 to 15 percent, based on the total weight of (a), (b) and (c), of an olefin copolymer, said olefin copolymer having polymerised therein at least one olefin monomer in an amount of from 70 to 97 percent and from 30 to 3 percent vinyl acetate, based on the total weight of olefin copolymer (c).

2. The blend of polymers according to claim 1 wherein the monoethylenically unsaturated monomer copolymerisable with vinylidene chloride in copolymer (a) is vinyl chloride, an alkyl acrylate, an alkyl methacrylate, acrylic acid, methacrylic acid, itaconic acid, acrylonitrile or methacrylonitrile.

3. The blend of polymers according to claim 1 wherein the monoethylenically unsaturated monomer copolymerisable with vinylidene chloride in copolymer (a) is vinyl chloride.

4. The blend of polymers according to any of claims 1 to 3 wherein the vinylidene chloride copolymer (a) contains vinylidene chloride in an amount of 70 to 90 percent, based on the vinylidene chloride copolymer weight.

5. The blend of polymers according to any of claims 1 to 4 wherein the olefin monomers of olefin copolymers (b) and (c) are 1-alkenes and have from 2 to 8 carbon atoms per molecule.

6. The blend of polymers according to claim 5 wherein the olefin monomers of copolymers (b) and (c) are ethylene, propylene, 1-butene or 1,3-butadiene.

7. The blend of polymers according to any of claims 1 to 6 wherein the olefin copolymer (b) is an ethylene/acrylic acid copolymer.

8. The blend of polymers according to any of claims 1 to 7 containing the olefin copolymer (b) in an amount of from 5 to 15 percent, based on the total polymer weight of (a), (b) and (c).

9. The blend of polymers according to any of claims 1 to 8 containing the olefin copolymer (c) in an amount of from 5 to 10 percent, based on the total weight of (a), (b) and (c).

10. A mono- or multilayered film wherein at least one layer is produced from a blend of polymers of any of claims 1 to 9.

11. The film of claim 10 which is a blown or oriented cast film.

12. The film of claim 10 or 11 having at least two layers wherein one layer is produced from a blend of polymers of any of claims 1 to 9 and the second layer is produced from an olefin copolymer, said olefin copolymer having copolymerised therein at least one olefin monomer in an amount of from 85 to 97 percent and from 15 to 3 percent acrylic or methacrylic acid, based on the total weight of the olefin copolymer.

## Patentansprüche

1. Polymermischung enthaltend

(a) von 70-97%, bezogen auf Gesamtgewicht von (a), (b) und (c), eines Vinylidenchloridcopolymeren, das eine Menge von 50-95% Vinylidenchlorid und eine Menge von 50-5% mindestens eines mit Vinylidenchlorid copolymerisierbaren monoethylenisch ungesättigten Monomeren einpolymerisiert enthält, wobei sich die Prozentangaben auf Gesamtgewicht des Vinylidenchloridcopolymeren (a) beziehen,

(b) von 30-3%, bezogen auf Gesamtgewicht von (a), (b) und (c), eines Olefincopolymeren, das eine Menge von 85-97% mindestens eines Olefinmonomeren und von 15-3% Acrylsäure oder Methacrylsäure einpolymerisiert enthält, wobei sich die Prozentangaben auf Gesamtgewicht des Olefincopolymeren (b) beziehen, und

(c) von 0-15%, bezogen auf Gesamtgewicht von (a), (b) und (c), eines Olefincopolymeren, das eine Menge von 70-97% mindestens eines Olefinmonomeren und von 30-3% Vinylacetat einpolymerisiert enthält, wobei sich die Prozentangaben auf Gesamtgewicht des Olefincopolymeren (c) beziehen.

2. Polymermischung nach Anspruch 1, dadurch gekennzeichnet, daß das mit Vinylidenchlorid im Copolymer (a) copolymerisierbare monoethylenisch ungesättigte Monomer Vinylchlorid, ein Alkylacrylat, ein Alkylmethacrylat, Acrylsäure, Methacrylsäure, Itaconsäure, Acrylnitril oder Methacrylnitril ist.

3. Polymermischung nach Anspruch 1, dadurch gekennzeichnet, daß das mit Vinylidenchlorid im Copolymer (a) copolymerisierbare monoethylenisch ungesättigte Monomer Vinylchlorid ist.

4. Polymermischung nach jedem der Ansprüche 1 bis 3, dadurch gekennzeichnet, daß das Vinylidenchloridcopolymer (a) Vinylidenchlorid in einer Menge von 70-90%, bezogen auf das Gewicht des Vinylidenchloridcopolymeren, enthält.

5. Polymermischung nach jedem der Ansprüche 1 bis 4, dadurch gekennzeichnet, daß die Olefinmonomeren der Olefincopolymeren (b) und (c) 1-Alkene sind und 2-8 Kohlenstoffatome pro Molekül aufweisen.

6. Polymermischung nach Anspruch 5, dadurch gekennzeichnet, daß die Olefinmonomeren der Copolymeren (b) und (c) Ethylen, Propylen, 1-Buten oder 1,3-Budatien sind.

7. Polymermischung nach jedem der Ansprüche 1 bis 6, dadurch gekennzeichnet, daß das Olefincopolymer (b) ein Ethylen-/Acrylsäurecopolymer ist.

8. Polymermischung nach jedem der Ansprüche 1 bis 7, dadurch gekennzeichnet, daß sie das Olefincopolymer (b) in einer Menge von 5-15%, bezogen auf Gesamtpolymergewicht von (a), (b) und (c), enthält.

9. Polymermischung nach jedem der Ansprüche 1 bis 8, dadurch gekennzeichnet, daß sie das Olefincopolymer (c) in einer Menge von 5-10%, bezogen auf Gesamtgewicht von (a), (b) und (c), enthält.

10. Ein- oder mehrschichtiger Film, dadurch gekennzeichnet, daß mindestens eine Schicht aus der Polymermischung nach jedem der Ansprüche 1 bis 9 hergestellt ist.

11. Film nach Anspruch 10, dadurch gekennzeichnet, daß er ein geblasener oder gereckter gegossener Film ist.

12. Film nach Anspruch 10 oder 11, dadurch gekennzeichnet, daß er mindestens zwei Schichten aufweist, wobei eine Schicht hergestellt ist aus der Polymermischung nach jedem der Ansprüche 1 bis 9 und die zweite Schicht aus einem Olefincopolymeren hergestellt ist, wobei das Olefincopolymer mindestens ein Olefinmonomer in einer Menge von 85 bis 97% und von 15-3% Acrylsäure oder Methacrylsäure copolymerisiert enthält, wobei sich die Prozentangaben auf Gesamtgewicht des Olefincopolymeren beziehen.

## Revendications

1. Un mélange de polymères comprenant:

(a) entre 70 et 97 pourcent, par rapport au poids total de (a), (b) et (c), d'un copolymère de chlorure de vinylidène, ledit copolymère de chlorure de vinylidène renfermant, à l'état polymérisé, le chlorure de vinylidène en une quantité comprise entre 50 et 95 pourcent, et au moins un monomère à insaturation monoéthylénique, copolymérisable avec le précédent, en une quantité comprise entre 50 et 5 pourcent, par rapport au poids total du copolymère (a) de chlorure de vinylidène;

(b) entre 30 et 3 pourcent, par rapport au poids total de (a), (b) et (c), d'un copolymère d'oléfine, ledit copolymère d'oléfine renfermant, à l'état polymérisé, au moins un monomère oléfinique en une quantité comprise entre 85 et 97 pourcent, et entre 15 et 3 pourcent d'acide acrylique ou méthacrylique, par rapport au poids total du copolymère (b) d'oléfine; et

(c) entre 0 et 15 pourcent, par rapport au poids total de (a), (b) et (c), d'un copolymère d'oléfine, ledit copolymère d'oléfine renfermant, à l'état polymérisé, au moins un monomère oléfinique en une quantité comprise entre 70 et 97 pourcent, et entre 30 et 3 pourcent d'acétate de vinyle, par rapport au poids total de copolymère (c) d'oléfine.

2. Le mélange de polymères selon la revendication 1, dans lequel le monomère à insaturation monoéthylénique, copolymérisable avec le chlorure de vinylidène dans le copolymère (a), est le chlorure de vinyle, un acrylate d'alkyle, un méthacrylate d'alkyle, l'acide arcylique, l'acide méthacrylique, l'acide itaconique, l'acrylonitrile ou le méthacrylonitrile.

3. Le mélange de polymères selon la revendication 1, dans lequel le monomère à insaturation monoéthylénique, copolymérisable avec le chlorure de vinylidène dans le copolymère (a), est le chlorure de vinyle.

4. Le mélange de polymères selon l'une quelconque des revendications 1 à 3, dans lequel le copolymère (a) de chlorure de vinylidène renferme le chlorure de vinylidène en une quantité comprise entre 70 et 90 pourcent, rapportée au poids du copolymère de chlorure de vinylidène.

5. Le mélange de polymères selon l'une quelconque des revendications 1 à 4, dans lequel les monomères oléfiniques des copolymères (b) et (c) d'oléfines sont des 1-alcènes et comportent de 2 et 8 atomes de carbone par molécule.

6. Le mélange de polymères selon la revendication 5, dans lequel les monomères oléfiniques des copolymères (b) et (c) sont éthylène, propylène, 1-butène ou 1,3-butadiène.

7. Le mélange de polymères selon l'une quelconque des revendications 1 à 6, dans lequel le copolymère (b) d'oléfine est un copolymère d'éthylène/acide acrylique.

8. Le mélange de polymères selon l'une quelconque des revendications 1 à 7, renfermant le copolymère (b) d'oléfine en une quantité comprise entre 5 et 15 pourcent, rapportée au poids total de polymères (a), (b) et (c).

9. Le mélange de polymères selon l'une quelconque des revendications 1 à 8, renfermant le copolymère (c) d'oléfine en une quantité comprise entre 5 et 10 pourcent, rapportée au poids total de (a), (b) et (c).

10. Un film mono- ou multicouche, dans lequel une couche au moins est élaborée à partir d'un mélange de polymères selon l'une quelconque des revendications 1 à 9.

11. Le film de la revendication 10, qui est un film soufflé ou un film moulé et orienté.

12. Le film de la revendication 10 ou 11, comprenant au moins deux couches, dont l'une est élaborée à partir d'un mélange de polymères selon l'une quelconque des revendications 1 à 9, et l'autre est élaborée à partir d'un copolymère d'oléfine, ledit copolymère d'oléfine renfermant, à l'état copolymérisé, au moins un monomère oléfinique en une quantité comprise entre 85 et 97 pourcent, et entre 15 et 3 pourcent d'acide acrylique ou méthacrylique, par rapport au poids total du copolymère d'oléfine.